# EUROPÄISCHE PATENTANMELDUNG

(11) **EP 3 940 931 A1**
(43) Veröffentlichungstag der Anmeldung: **19.01.2022**
(21) Anmeldenummer: 20185753.9
(22) Anmeldetag: 14.07.2020
(51) Int. Cl.: H02K 15/00

(54) **VERFAHREN ZUR HERSTELLUNG EINES ROTORS EINER ASYNCHRONMASCHINE**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE)

(57) **Zusammenfassung**

Die Erfindung betrifft ein Verfahren zur Herstellung eines Rotors (4) einer Asynchronmaschine (1) mit folgenden Schritten,
- Bereitstellen eines Rotorblechpakets (5) mit parallel zu einer Rotorachse (4a) des Rotors (4) verlaufenden Nuten (8),
- Einsetzen von Leiterstäben (6) in die Nuten (8) derart, dass die Leiterstäbe (6) aus den Stirnseiten (15a, 15b) des Rotorblechpakets (5) ragen,
- Bereitstellen einer ersten und zweiten Kurzschlussringscheibe (7a, 7b),
- axiales Einpressen der ersten und zweiten Kurzschlussringscheibe (7a,7b) auf die aus der Stirnseite (15a, 15b) des Rotorblechpakets (5) ragenden Leiterstäbe (6),
wobei in einem anschließenden Schritt zumindest die erste Kurzschlussringscheibe (7a) gegenüber der zweiten Kurzschlussringscheibe (7b) durch entgegengesetzt gerichtete Drehmomente (D1,D2), welche auf die Kurzschlussringscheiben (7a, 7b) wirken, um einen vorgebbaren Winkel (α) verdreht wird, wobei die parallel verlaufenden Nuten (14) mit den jeweiligen Leiterstäben (6) nach Beendigung der Verdrehung nun zusätzlich schräg verlaufen.

## Beschreibung

Die Erfindung betrifft ein Verfahren zur Herstellung eines Rotors einer Asynchronmaschine mit folgenden Schritten, bereitstellen eines Rotorblechpakets mit parallel zu einer Rotorachse des Rotors verlaufenden Nuten, einsetzen von Leiterstäben in die Nuten derart, dass die Leiterstäbe aus den Stirnseiten des Rotorblechpakets ragen, bereitstellen einer ersten und zweiten Kurzschlussringscheibe, axiales Einpressen der ersten und zweiten Kurzschlussringscheibe auf die aus der Stirnseite des Rotorblechpakets ragenden Leiterstäbe.

Kurzschlussläufer dynamoelektrischer rotatorischer Maschinen werden im niedrigeren Leistungsbereich in Druckgusstechnik in einem Arbeitsgang hergestellt. Dieses stoffschlüssige Verfahren ist kostenintensiv, da die Druckgussformen teuer sind und vergleichsweise schnell verschleißen. Des Weiteren ist bei der Herstellung ein vergleichsweise hohes Maß an Streuung in der Qualität eines derartig hergestellten Kurzschlussläufers vorhanden. Dies äußert sich beispielsweise in der Veränderung der Qualität der Schmelze im Tiegel, durch Verunreinigungen der Schmelze während des Gießprozesses, durch Trennmittel bzw. Abrasion am Werkzeug, ebenso wie durch Lunkerbildung oder Spannungsrissbildung bei Abkühlung des Druckgusses.

Im höheren Leistungsbereich oder bei Sonderanwendungen dynamoelektrischer rotatorischer Maschinen, werden einzelne Leiterstäbe mit einem Kurzschlussring elektrisch und mechanisch verbunden. Dies geschieht beispielsweise durch Löt- oder Schweißvorgänge, wie dies der DE 34 13 519 C2 zu entnehmen ist.

Nachteilig dabei ist jedoch, dass bei diesen größeren dynamoelektrischen Maschinen Kurzschlussringe vorhanden sind, die eine umlaufende Lötwanne aufweisen, die beim Lötprozess komplett mit Lot zu füllen ist.

Dabei wird lediglich das Volumen, des in der Lötwanne ragenden Volumen der Läuferstäbe nicht mit Lot gefüllt. Aufgrund des hohen Silberanteils im Lot ist dabei unter anderem eine Herstellung der Lötverbindung zwischen Läuferstäben und Kurzschlussring wirtschaftlich nicht besonders sinnvoll.

Um die, auch bei niedrigen Leistungsbereich auftretenden Qualitätsverluste zu beheben, wird beispielsweise unter Schutzgaseinfluss der Druckgussvorgang durchführt. Ebenso werden Werkzeuge mit mehreren Entlüftungsmöglichkeiten vorgesehen, oder es wird sogar ein Nachlegieren der Schmelze durchgeführt.

Diese Eingriffe ermöglichen die Steigerung der Effizienz des Asynchronkäfigläufers, jedoch sind zur Festigkeit zusätzliche Maßnahmen notwendig, die insbesondere eine hohe Drehzahltauglichkeit beinhalten, wie z.B. Stützringe oder Einsatz von Legierungen um höhere Festigkeitswerte zu erhalten.

Die EP 3 402 507 A1 schlägt ein Verfahren zur Herstellung eines Kurzschlussläufers einer Asynchronmaschine mit folgenden Schritten vor:
- Bereitstellen eines Rotorblechpakets mit im Wesentlichen axial verlaufenden Nuten,
- Einsetzen von Leiterstäben in die Nuten derart, dass die Leiterstäbe aus den Stirnseiten des Rotorblechpakets ragen und verpressen mit Kurzschlussringscheiben.

Es ist eine Aufgabe der vorliegenden Erfindung, geschrägte Rotoren herzustellen ohne auf Verfahren, wie Druckgießen, Schweißen oder Löten zurückgreifen zu müssen.

Die Aufgabe wird für das eingangs genannte Verfahren zur Herstellung eines Rotors dadurch gelöst, dass aufbauend auf den beschriebenen Schritten in einem anschließenden Schritt zumindest die erste Kurzschlussringscheibe gegenüber der zweiten Kurzschlussringscheibe durch entgegengesetzt gerichtete Drehmomente, welche auf die Kurzschlussringscheiben wirken um einen vorgebbaren Winkel verdreht wird, wobei die parallel verlaufenden Nuten mit den jeweiligen Leiterstäben nach Beendigung der Verdrehung nun zusätzlich schräg verlaufen.

In der Asynchrontechnik werden die Rotorpakete mit ihren Leiterstäben zur Bildung eines Kurzschlusskäfiges zur Reduzierung einer Drehmomentwelligkeit und Verbesserung eines Anlaufverhaltens überwiegend schräg ausgeführt. Eine Verdrehung einer Nut im Rotor entspricht im Wesentlichen dem Winkelabstand einer Statornut. Mit dem erfindungsgemäßen Verfahren kann man auf einfacher Weise Läuferstäbe als einfach geschränkte oder doppelgeschränkte Käfige aufbauen. Käfige mit doppelgeschränkten Läuferstäben nennt man auch Staffelläufer. Durch das Schränken der Läuferstäbe erzielt man günstigere Anlaufbedingungen, so werden hierdurch beispielsweise ein Nutenpfeiffen, ein inhomogenes Drehmoment, magnetische Wirbelungen, Rüttelkräfte und Bremsungen vermindert.

Als ein weiterer entscheidender Vorteil für das erfindungsgemäße Verfahren wird angesehen, dass man hier auf Verfahren wie Druckgießen oder Löten oder Schweißen verzichten kann und den Rotor in einer automatisierten Fertigung fertigen lassen kann. Die eingelegten Leiterstäbe werden dann beispielsweise in einer Verdrehmaschine mit einer programmierten Biegelinie schraubenförmig mit dem Rotorpaket verdreht, so dass eine Festigkeit ohne Schweißen und Löten entsteht. Zuvor mussten verdreht-paketierte Rotorpakete mit Aluminium- oder Kupferschmelze ausgegossen werden, welches zu umständlich ist und einem automatisierten Fertigungsverfahren entgegensteht.

Verfahrensgemäß wird als ein weiterer Vorteil angesehen, dass das Bereitstellen eines Rotorpaketes das lose Auffädeln von Rotorblechen an dem Rotorblechpaket beinhaltet und das Verdrehen eine kraftschlüssige Verbindung zwischen dem Rotorblechpaket und den Leiterstäben entsteht.

Ein weiterer Vorteil ist, dass die Kurzschlussringe auf ein gerade paketiertes Paket aufgepresst werden, somit kein Abknicken der Leiterstäbe erfolgt und erst im Anschluss werden die beiden außenliegenden Kurzschlussringscheiben gegeneinander verdreht und dadurch wird die Schrägung erzeugt und auch die kraftschlüssige Verbindung zwischen dem Rotorblechpaket und den Leiterstäben.

Vorteilhafterweise wird als ein Material für die Leiterstäbe und der Kurzschlussringscheiben vorzugsweise Aluminium, Kupfer oder Aluminium- oder Kupferlegierung verwendet.

Für das Aufpressen bzw. Einpressen des Kurzschlussringscheiben ist es von Vorteil, wenn die Kurzschlussringscheiben über die Rekristallisationstemperatur erwärmt ist bzw. sind, und das axiale Einpressen zumindest einer Kurzschlussringscheibe auf die aus der Stirnseite des Rotorblechpakets ragenden Leiterstäben unter Berücksichtigung eines Temperaturbereiches, einer Formänderung sowie einer Formänderungsgeschwindigkeit mit anschließendem oder gleichzeitigen Warmumformen der axial aufgeschobenen Kurzschlussringscheiben erfolgt. Als ein vorteilhafter Temperaturbereich hat sich für die Kurzschlussringscheiben herausgestellt, dass dies bei 400 - 500 °Celsius erfolgen sollte. Die Formänderung sollte im Bereich von 0,5 und die Formänderungsgeschwindigkeit sollte im Bereich von 1 bis 4 pro Sekunde liegen.

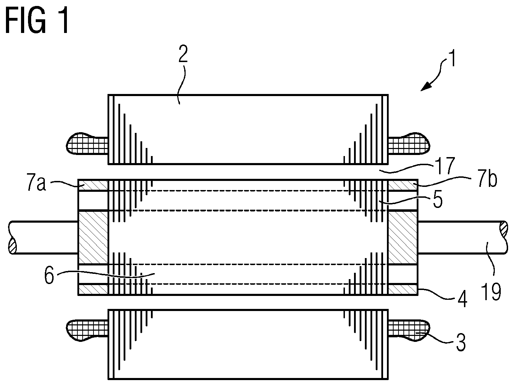

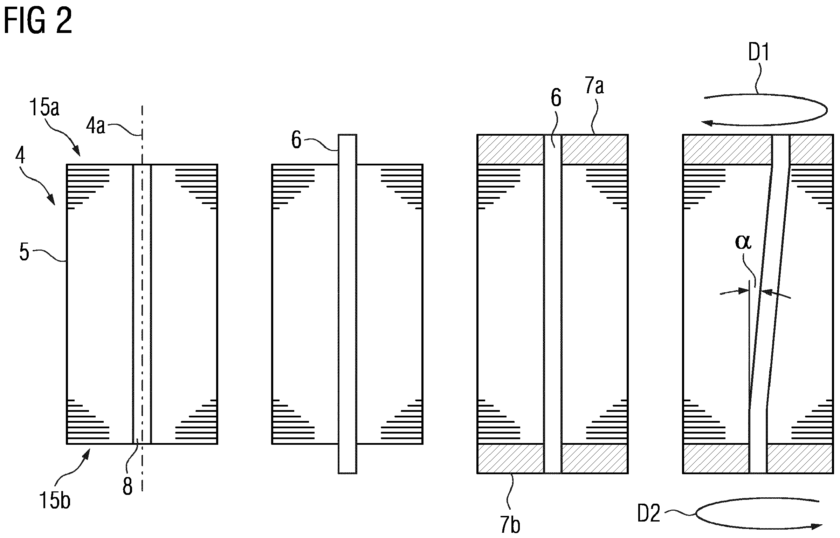

Die Erfindung wird anhand eines Ausführungsbeispiels näher erläutert. Es zeigen die FIG 1 einen prinzipiellen Längsschnitt einer Asynchronmaschine nach dem Stand der Technik und die FIG 2 die erfindungsgemäßen Verfahrensschritte von links nach rechts.

FIG 1 zeigt einen prinzipiellen Längsschnitt einer Asynchronmaschine 1 mit einem Stator 2, der an seinen Stirnseiten ein Wicklungssystem 3 ausbildet, welches dort wiederum Wickelköpfe ausbildet. Das Wicklungssystem 3 kann dabei beispielsweise aus gezehnten Spulen, Formspulen, Zahnspulen unterschiedlicher oder gleicher Spulenweite aufgebaut sein.

Über einen Luftspalt 17 der Asynchronmaschine 1 ist der Rotor 4 vom Stator 2 beabstandet. Der Rotor 4 weist ein Rotorblechpaket 5 auf. An den Stirnseiten 15a, 15b des Rotorblechpaketes 5 ist jeweils eine erste Kurzschlussringscheibe 7a und eine zweite Kurzschlussringscheibe 7b angeordnet. Der Rotor 4 läuft auf einer Welle 19.

Gemäß der FIG 2 werden die erfindungsgemäßen Verfahrensschritte erläutert. Die Verfahrensschritte verlaufen von links nach rechts. Zuerst wird das Rotorblechpaket 5 mit parallel zu einer Rotorachse 4a des Rotors 4 verlaufenden Nuten 8 bereitgestellt. Das Bereitstellen kann insbesondere durch ein loses Auffädeln von einzelnen Rotorblechen zu dem Rotorblechpaket 5 erfolgen. In einem nächsten Schritt werden Leiterstäbe 6 in die Nuten 8 eingesetzt. Anmerkung zur vereinfachten Darstellung, hier ist nur eine Nut 8 in den Zeichnungen abgebildet, aber es wird zumindest eine zweite Nut auf der gegenüberliegenden Seite vorhanden sein.

In einem weiteren Schritt wird eine erste und zweite Kurzschlussringscheibe 7a,7b bereitgestellt und axial wird die erste und die zweite Kurzschlussringscheibe 7a,7b auf die aus den Stirnseiten 15a, 15b des Rotorblechpaketes 5 ragenden Leiterstäbe 6 aufgepresst. Dieses axiale Einpressen geschieht unter Berücksichtigung eines idealen Temperaturbereiches zur Formänderung sowie der optimalen Formänderungsgeschwindigkeit. Eine plastische Verformung findet dabei durch Versetzungswanderung der Atomebenen im Gitter statt. Diese Wanderung und somit das Überwinden von Hindernissen im Atomgitter (wie z.B. Stufenversetzung, Fremdatome etc.) wird durch eine Temperaturerhöhung begünstigt. So steigt ab einer bestimmten materialabhängigen Temperaturgrenze das Formänderungsvermögen an. Die Umformgeschwindigkeit, die Temperatur und die Fließgeschwindigkeit des jeweiligen Materials sind somit aufeinander abzustimmen.

Dabei bildet sich zwischen dem Material der Kurzschlussringscheiben 7a,7b und den Leiterstäben 6 eine Mikroverschweißung. Diese Mikroverschweißung entsteht dadurch, dass der Leiterstab 6 und die Kurzschlussringscheiben 7a,7b fest aufeinander reiben und somit eine Flächenpressung und zusätzliche Reibungswärme generieren. Dabei werden die zulässigen Scherspannung dieser Materialien lokal überschritten und es werden Stoffübergänge durch Diffusion an der Grenzfläche zwischen dem Leiterstab 6 und der Kurzschlussringscheibe 7a,7b verursacht. Die Folge davon sind Aufschweißungen im Mikrobereich sowie Mikroverschweißungen.

Da nun die Kurzschlussringscheiben 7a,7b fest mit den Leiterstäben 6 verschweißt sind wird in einem letzten Verfahrensschritt eine Schrägung der Leiterstäbe hergestellt. In diesem anschließenden Schritt wird zumindest die erste Kurzschlussringscheibe 7a gegenüber der zweiten Kurzschlussringscheibe 7b durch entgegengesetzt gerichtete Drehmomente D1, D2, welche auf die Kurzschlussringscheiben 7a,7b wirken, um einen vorgebbaren Winkel α verdreht, wobei die parallel verlaufenden Nuten 8 mit dem jeweils darin angeordneten Leiterstäben 6 nach Beendigung der Verdrehung nun zusätzlich schräg verlaufen. Weiterhin beinhaltet das Verdrehen eine kraftschlüssige Verbindung zwischen dem Rotorblechpaket 5 und den Leiterstäben 6.

## Patentansprüche

1. Verfahren zur Herstellung eines Rotors (4) einer Asynchronmaschine (1) mit folgenden Schritten,
- Bereitstellen eines Rotorblechpakets (5) mit parallel zu einer Rotorachse (4a) des Rotors (4) verlaufenden Nuten (8),
- Einsetzen von Leiterstäben (6) in die Nuten (8) derart, dass die Leiterstäbe (6) aus den Stirnseiten (15a, 15b) des Rotorblechpakets (5) ragen,
- Bereitstellen einer ersten und zweiten Kurzschlussringscheibe (7a, 7b),
- axiales Einpressen der ersten und zweiten Kurzschlussringscheibe (7a,7b) auf die aus der Stirnseite (15a, 15b) des Rotorblechpakets (5) ragenden Leiterstäbe (6),
**dadurch gekennzeichent**, dass in einem anschließenden Schritt zumindest die erste Kurzschlussringscheibe (7a) gegenüber der zweiten Kurzschlussringscheibe (7b) durch entgegengesetzt gerichtete Drehmomente (D1, D2), welche auf die Kurzschlussringscheiben (7a,7b) wirken, um einen vorgebbaren Winkel (α) verdreht wird, wobei die parallel verlaufenden Nuten (8) mit den jeweiligen Leiterstäben (6) nach Beendigung der Verdrehung nun zusätzlich schräg verlaufen.

2. Verfahren nach Anspruch 1, wobei das Bereitstellen des Rotorblechpakets (5) das lose Auffädeln von Rotorblechen zu dem Rotorblechpaket (5) beinhaltet und durch das Verdrehen eine kraftschlüssige Verbindung zwischen dem Rotorblechpaket (5) und den Leiterstäben (6) entsteht.

3. Verfahren nach Anspruch 1 oder 2, wobei als ein Material der Leiterstäbe (6) und der Kurzschlussringscheiben(7a,7b) vorzugsweise Aluminium, Kupfer oder eine Aluminium- oder Kupferlegierung verwendet wird.

4. Verfahren nach Anspruch 3, wobei zumindest das Material der Kurzschlussringscheiben (7a,7b) über die Rekristallisationstemperatur erwärmt ist, und das axiale Einpressen zumindest einer Kurzschlussringscheibe (7) auf die aus der Stirnseite (15a, 15b) des Rotorblechpakets (5) ragenden Leiterstäben (6) unter Berücksichtigung eines Temperaturbereichs, einer Formänderung sowie einer Formänderungsgeschwindigkeit mit anschließendem oder gleichzeitigem Warmumformen der axial aufgeschobenen Kurzschlussringscheiben (7a,7b) ?.
